Europäisches Patentamt

European Patent Office

Office européen des brevets

(19)

(11) Publication number: **0 182 721**
A2

# EUROPEAN PATENT APPLICATION

(21) Application number: **85402249.8**

(22) Date of filing: **20.11.85**

(51) Int. Cl.⁴: **G 11 B 23/023**

(30) Priority: **20.11.84 JP 175974/84 U**

(43) Date of publication of application: **28.05.86**
**Bulletin 86/22**

(84) Designated Contracting States: **AT BE DE FR GB IT NL**

(71) Applicant: **SONY CORPORATION,**
**7-35 Kitashinagawa 6-Chome Shinagawa-ku,**
**Tokyo 141 (JP)**

(72) Inventor: **Sasaki, Koji, SONY**
**CORPORATION 7-35 Kitashinagawa 6-chome,**
**Shinagawa-ku Tokyo (JP)**
Inventor: **Kawashima, Noriyasu, SONY**
**CORPORATION 7-35 Kitashinagawa 6-chome,**
**Shinagawa-ku Tokyo (JP)**
Inventor: **Sasaki, Shin, SONY**
**CORPORATION 7-35 Kitashinagawa 6-chome,**
**Shinagawa-ku Tokyo (JP)**

(74) Representative: **Descourtieux, Philippe et al, CABINET**
**BEAU de LOMENIE 55 rue d'Amsterdam, F-75008 Paris**
**(FR)**

(54) **A case for a tape cassette.**

(57) A case for a tape cassette having an opening (5) on at least one side thereof to enable inserting the tape cassette (T) characterized by a plurality of line-like projections (2, 3) extending parallel to each other being provided on at least one of the inner or outer surfaces of the case (C). The provision of the projections (2) on the outer surface increases the friction of the surface to enable easier gripping of the case (C) and to prevent slipping of the case (C) when placed in a stack and the provision of the projections (3) on an inner surface helps to prevent unsightly scratches from being made while inserting and removing the tape cassette (T) from the case (C).

## A CASE FOR A TAPE CASSETTE

### BACKGROUND OF THE INVENTION

The present invention is directed to a case for receiving a tape cassette such as a video cassette.

A case or a box for a video cassette is known and has been produced by forming a blank from a sheet of cardboard-like material or plastic material. The blank is then folded and joined together to form a rectangular prism or box having an opening at one edge through which the cassette is inserted into the case. An example of such a known case or cassette sleeve is disclosed in United Kingdom Patent 2, 083, 937.

One of the problems existing with known cases is that the smooth outer finish may become slippery when grasped by a person handling the cassette and case. Another problem is that if the cassette has a tight fit within the case, a removal of the cassette can be hampered due to a suction being created in the base of the case as the cassette is being removed therefrom.

As mentioned hereinabove, known cases or cassette sleeves have been manufactured out of a cardboard-like material. Recently it has been desirable to form these cases out of a clear plastic sheet material. In such an arrangement, the clear plastic material can become scratched which causes the case or sleeve to become aesthetically unappealing.

### SUMMARY OF THE INVENTION

The present invention is directed to an improved case or cassette sleeve which has an increased resistance to the formation of visible scratches and has surfaces with an increased friction.

To accomplish these goals, the present invention is directed to a case for a tape cassette, said case having five wall members arranged to form a rectangular prism with an opening on one side thereof through which a tape cassette is inserted, said case on at least one surface of each wall member having a plurality of line-like projections extending parallel to each other.

If the inner surface of the wall members have the projections, this will greatly reduce problems with unsightly scratches being formed on the inner surface due to inserting and removing the cassette from the case. If only the outer surfaces are provided with the projections, this will greatly increase the friction for these outer surfaces to enable easy grasping of the case and also easy stacking of the cases without slippage.

Preferably, the case will have a first and second set of the line-like projections with the line-like projections of the first set extending in a first direction and the line-like projections of the second set extending in a second direction at an angle to the first direction. In this arrangement, at least one of the first and second sets is on an outer surface of each wall member of the case. It is possible that both the first and second sets are provided on the outer surface although the first set could be provided on the outer surface and the second set is provided on the inner surface. As in the previously mentioned embodiments, the projections on each surface prevent or limit the formation of unsightly scratches on that surface. In addition, the projections increase the surface friction to enable easy grasping of the case and present the case from sliding when piled with other cases. With the first and second directions extending at an angle to each other, this will improve the mechanical strength of the sheet-like material forming the wall members of the case and therefore improve the structural rigidity of the case to prevent deformation from the application of outside forces or from an application of heat.

## BRIEF DESCRIPTION OF THE DRAWINGS

FIG. 1 is an exploded view in perspective of the case of the present invention with a label sheet and a tape cassette;

FIG. 2a is a cross-sectional view taken on lines A-A' of FIG.1;

FIG.2b is a cross-sectional view taken along lines B-B' of FIG.1;

FIGS. 3a-3e are a series of perspective views illustrating different steps or stages in the process of forming the case of the present invention with:

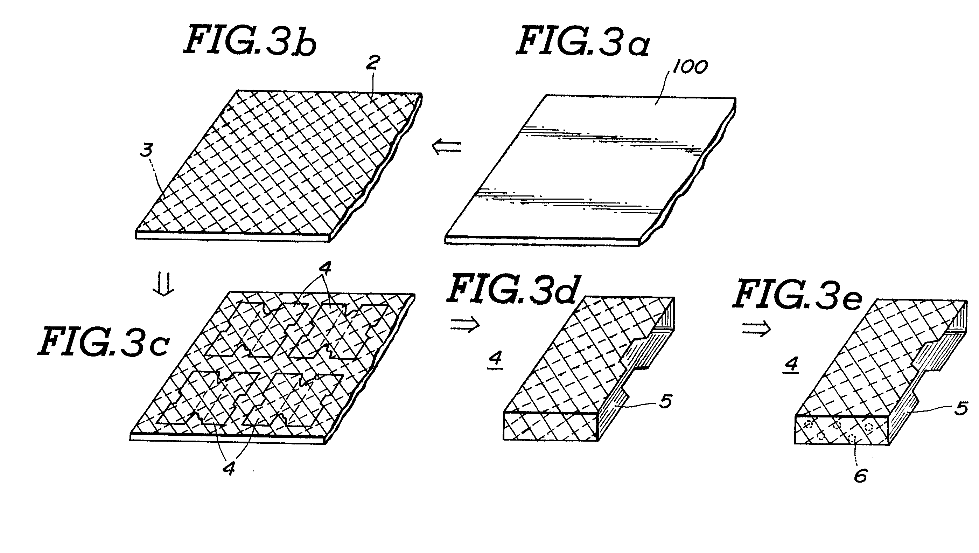

FIG.3a illustrating a sheet prior to forming the projections on the surface or surfaces thereof;

FIG.3b illustrating the sheet with the plurality of projections formed thereon;

FIG.3c illustrating the sheet with the projections after stamping or cutting blanks in the sheets;

FIG.3d illustrating a blank being folded into the case of the present invention; and

FIG.3e illustrating the case after securing the end flaps;

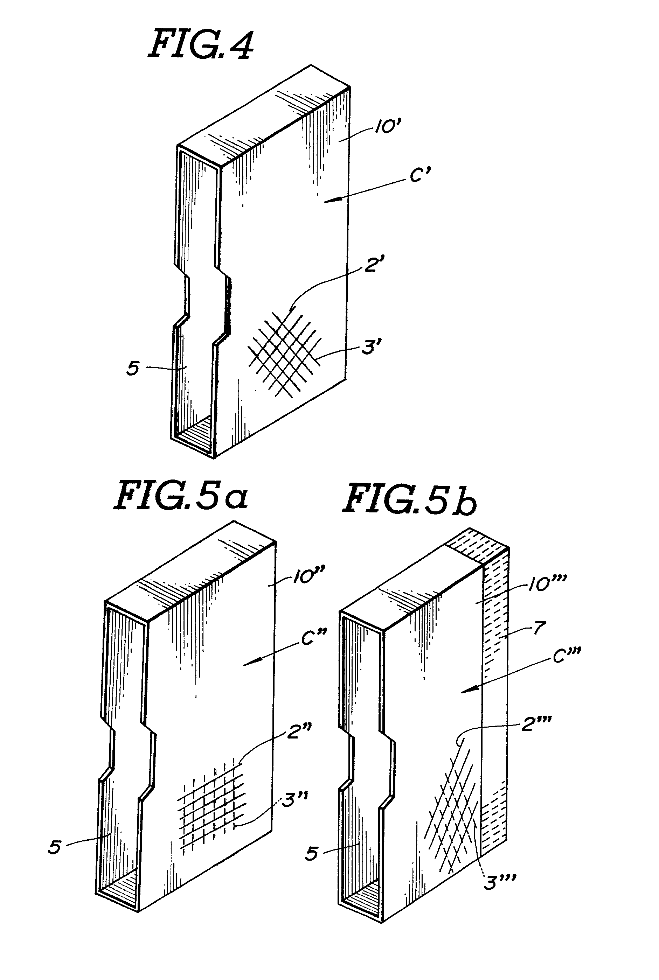

FIG.4 is a perspective view of a second embodiment of the case of the present invention;

FIG.5a is a perspective view of another embodiment of the case in accordance with the present invention;

FIG.5b is yet another embodiment of the present invention; and

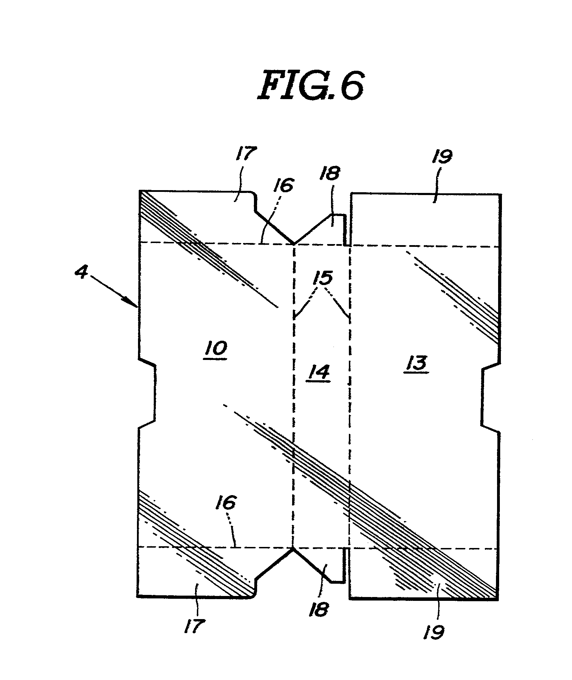

FIG.6 is a plan view of a blank stamped from a sheet with the waste portions removed therefrom prior to being folded into the case of the present invention.

## DESCRIPTION OF THE PREFERRED EMBODIMENTS

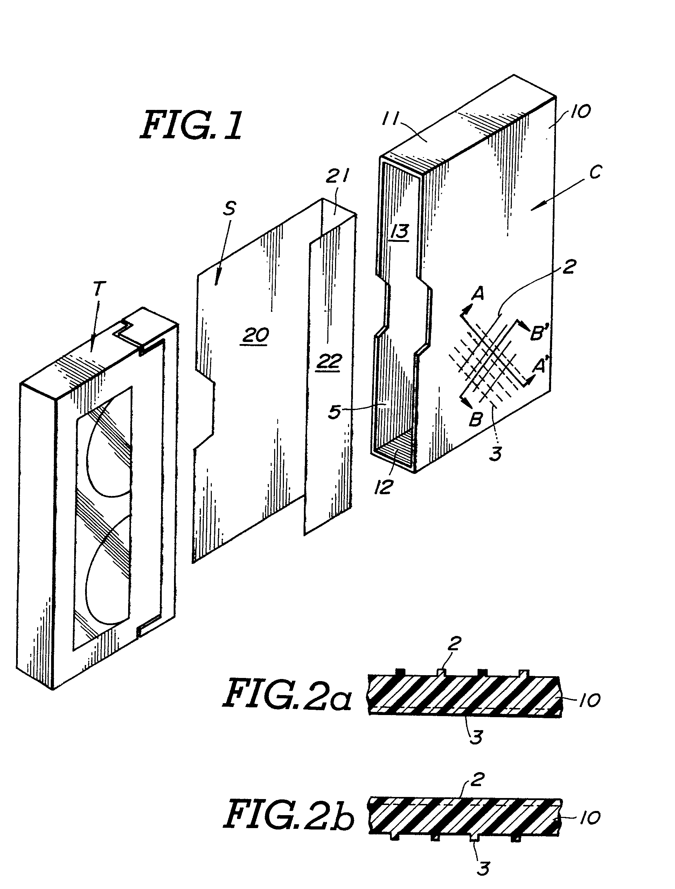

The principles of the present invention are particularly useful when incorporated in a case or cassette sleeve C which is illustrated in FIG.1 in an exploded perspective view with a label sheet S and a tape cassette T. As illustrated, the case C is a rectangular box or prism having five side wall members 10, 11, 12 and 13 (FIG.1) and 14 (see FIG.6) which are formed into a rectangular box or rectangular prism having one edge or side missing to form an opening 5. The edges of the wall members 10 and 13 may have a cut-out portion as illustrated. The cassette T which is illustrated as being a video cassette is inserted through the opening 5 into the case C.

When utilizing clear or transparent plastic sheet material for forming the case or cassette sleeve C, a label sheet S may be provided to give information concerning the cassette such as the running time, the contents, etc. As illustrated in FIG.1, the sleeve S has three panels with one panel 20 corresponding to the wall member 13 of the case, a panel 21 which corresponds to the side wall 14 (FIG.6) and a short tab or panel 22, which would cover only a small portion of the inner surface of the wall member 10. The cassette sleeve or case C as explained thus far has the structure which is presently known.

The improvements in the cassette sleeve or case C are the provisions of a plurality of line-like projections 2 on the outer surface of each wall member 10-14 and a second set of projections 3 provided on the inner surface of each wall member 10-14. As illustrated, the line-like projections 2 extend parallel to each other in a first direction while the line-like projections 3 extend parallel to each other in a second direction at right angles to the first direction of the projections 2. As best illustrated in FIGS. 2a and 2b, projections 2 and 3 have a height that lies in the range
of 10 to 40μm and a width which is also in the same range.
As illustrated, they have substantially a square
cross-section with the spacing between the projections being
in the range of 1 to 5 mm. The wall thickness of the sheet
forming the wall members is in the range of 0.5 to 1 mm and
the sheet is preferably formed of a plastic material such as
polypropylene.

An example of a process of forming the case or box C
is illustrated in FIGS. 3a-3e. In FIG. 3a, a first step
is to provide a plastic sheet 100 which is made of, for
example, polypropylene. The sheet 100 is then passed between
a pair of rollers each having a plurality of grooves
corresponding to the line-like projections to be formed
on the sheet. The sheet is heated as it is passed through the
rollers so that the plurality of projections 2 are formed on
one surface of the sheet while a plurality of projections
3 are formed on the opposite surface. In the next step
which is illustrated in FIG. 3c, the sheet with the
projections are subjected to a die cutting or punch-cutting
to form box blanks with a profile 4 which is best
illustrated in FIG.6. After stripping away the waste
from the sheets, the box blank 4 is then folded into the
case-shape illustrated in FIG. 3d and subsequently the
overlapping end flaps are spot-welded at point 6 to complete
the formation of the case. The spot-welding can be carried
out by an ultrasonic spot-welding process.

It should be noted that the blank, as best illustrated
in FIG.6 with the excess material stripped therefrom, has
panels 10, 14 and 13 which are separated by fold lines or
creases 15 and these panels correspond to the wall members.
In addition, along the edges of panels 10, 14 and 13 are
two fold lines or creases 16 which define two end flaps
17 from panel 10, two flaps 18 from panel 14 and two flaps
19 from panel 13. As illustrated, the flaps 17, 18 and 19 are folded with the flap 19 being on the outer surface to form the end wall members 11 and 12 of the case or cassette sleeve C. The fold lines 15 and 16 are formed at the time of cutting the blank and facilitate folding the various panels to form the case C.

In the embodiment of the case or cassette sleeve C of FIG.1, the projections are provided on each surface of each of the wall members. In an embodiment of a case C' which is illustrated in FIG.4, projections 2' and 3' are provided only on one of the surfaces such as the outer surface of each of the wall members such as member 10'. It is noted that they could also be provided only on the inner wall surface if this was all that was desired. By providing the sets of projections 2' and 3' on the outer surface, an increased friction will be obtained over that which is obtained by providing only a single set of parallel extending line-like projections. It is also possible to provide only a single set on one surface. The provision of two sets whether on one surface or one set on each surface has the advantage of an improved rigidity for the wall members of the case. Also, an advantage of providing a set of projections on each surface is that when folding the blank 4 of FIG. 5, the projections are obtained on the outer surface regardless of the direction of folding of the blank.

As illustrated in FIGS. 1 and 4, the projections extend basically at right angles to each other and also are at an angle of approximatemy 45° to the edges of each of the wall members such as the wall member 10 or 10'. Other arrangements for the projections can be provided. For example, as illustrated in FIG. 5a, a case C'' has a set 2'' on the outer surface and a set 3'' on the inner surface with the sets extending at right angles to each other and also at substantially right angles to the edges of the wall members such as 10''. In another modification illustrated by a case C''' in FIG. 5b, projections 3''' are on the outer surface of each of the wall members while the projections 3''' are on the inner wall surface and these projections extend at an angle other than a right angle to each other and to the edges of the wall members such as members 10''' so that a diamond-shaped pattern is produced.

As mentioned with regard to FIG.1, a label sheet can be inserted in the casing. It is also possible to apply or print a label on an outer surface of the case such as the label 7 in FIG. 5b. This label can be directly printed on the wall member 10''' or be an adhesive label which is fixed onto the outer surface of the wall members. The label can contain information concerning the cassette such as the length and/or program recorded thereon.

Although various minor modifications may be suggested by those versed in the art, it should be understood that we wish to embody within the scope of the patent granted hereon, all such modifications as reasonably and properly come within the scope of our contribution to the art.

CLAIMS:

1. A case for a tape cassette comprising five wall members (10, 11, 12, 13, 14) arranged in a rectangular prism with an opening (5) along a sixth wall to enable inserting a tape cassette (7) into the casing (C), each of said wall members 510, 11, 12, 13, 14) having first and second sets of a plurality of line-like projections (2, 3; 2', 3'; 2", 3"; 2''', 3''') with the first set running in a first direction and the second set running in a second direction crossing the direction of the first set, at least one of said first and second sets being provided on an outer surface of each of the wall members (10, 11, 12, 13, 14).

2. A case according to claim 1, wherein both the first and second sets (2, 3; 2', 3'; 2", 3"; 2''', 3''') are provided on the outer surface.

3. A case according to claim 1, wherein the first set (2, 2', 2", 2''') is provided on the outer surface and the second set (3, 3', 3", 3''') is provided on an inner surface.

4. A case according to any one of claims 1 to 3, wherein at least one of the wall members (10, 11, 12, 13, 14) has a printed portion on an outer surface thereof.

5. A case according to any one of claims 1 to 3, wherein the first and second directions extend at right angles to each other.

6. A case according to any one of claims 1 to 4, wherein the first and second directions extend at an angle other than a right angle to each other.

7. A case according to any one of claims 1 to 6, wherein the first and second directions extend at an angle other than a right angle to the edge of the wall members (10, 11, 12, 13, 14).

8.   A case according to any one of claims 1 to 6, wherein each of the first and second directions extend at a right angle to the edges of the wall members (10, 11, 12, 13, 14).

9.   A case for a tape cassette comprising five wall members (10, 11, 12, 13, 16) arranged to form a rectangular prism with one side open (5) to receive a tape cassette (T) being inserted into the case (C), at least one of the inner and outer surfaces of each of the wall members (10, 11, 12, 13, 14) having a plurality of line-like projections (2 or 3; 2' or 3'; 2" or 3"; 2''' or 3''') extending parallel to each other.

10.   A case according to claim 9, wherein the one surface is an outer surface.

11.   A case according to claim 9, wherein the other of the inner and outer surface has a second plurality of line-like projections (3 or 2; 3' or 2'; 3" or 2"; 3''' or 2''') extending parallel to each other and at an angle to the first-mentioned plurality of line-like projections (2 or 3; 2' or 3';2" or 3", 2''' or 3''').

0182721

1/4

FIG.1

FIG.2a

FIG.2b

*FIG.3b*

*FIG.3a*

*FIG.3c*

*FIG.3d*

*FIG.3e*

2/4

0182721

*FIG.4*

10'

C'

2'

3'

5

*FIG.5a*

10"

C"

2"

3"

5

*FIG.5b*

10'''

7

C'''

2'''

3'''

5

## FIG.6